# EUROPEAN PATENT APPLICATION

(11) **EP 4 616 696 A1**
(43) Date of publication of application: **17.09.2025**
(21) Application number: 25162729.5
(22) Date of filing: 10.03.2025
(51) Int. Cl.: A01D 41/127, A01D 45/02, G01S 13/88

(54) **CROP LOSS MONITORING**

(30) Priority: 11.03.2024 US 202463563521 P
(71) Applicant: Precision Planting LLC, Tremont, IL 61568 (US)
(72) Inventor: Brunet Avalos, Maria Nieves, Tremont, 61568 (US); Hildebrand, William Kurt, Tremont, 61568 (US); Harness, Andrew William, Tremont, 61568 (US); Bitting, Austin, Tremont, 61568 (US)
(74) Representative: AGCO Intellectual Property Department

(57) **Abstract**

Systems and methods are provided for monitoring crop loss associated with a header arrangement operably couplable to an agricultural harvesting machine. One or more transceiver sensors are coupleable, in use, to the header arrangement and configured, in use, for transmitting measurement signals and receiving reflections thereof from an object within a sensing region of the sensor which at least partly includes a region below the header arrangement. Sensor data therefrom is processed to identify crop constituents present within the sensing region and a loss metric for an agricultural operation performed by the header arrangement is determined in dependence thereon. Operation of operable components of or otherwise associated with the header arrangement and/or the agricultural harvesting machine can be controlled in dependence on the determined loss metric.

## Description

### CROSS-REFERENCE TO RELATED APPLICATIONS

Not applicable.

### FIELD

Embodiments of the present disclosure relate generally to systems and methods for monitoring crop loss associated with an agricultural harvesting operation.

### BACKGROUND

In agricultural operations, such as harvesting of corn and the like, it is possible and indeed important to control multiple parameters to maximize the efficiency of the process and reduce losses experienced due to incorrect or inappropriate operating conditions. For instance, harvesting performance can depend on a distance between skid plates in row units, cutting/chain speed in row units and forward speed of the machine. Small changes in these parameters can significantly increase grain loss due to crop or constituents thereof (e.g. cobs, kernels, etc.) being thrown out of the header arrangement or crushed. Widths of headers for said machines can be up to and in some instances exceed 10m. Accordingly, it is unrealistic for the operator alone to continuously supervise the full header (or parts thereof) whilst simultaneously attending numerous other tasks such as machine parameter adjustment, on the go un-loading, etc. Furthermore, given such tasks often take place over extended periods, e.g. all day, operator fatigue additionally reduces the operator awareness and reaction time. Accordingly, systems which reply on operator monitoring of the header performance can experience significant issues in terms of losses.

It would therefore be advantageous to provide means to assist an operator of such machines in monitoring operation of the header arrangements thereof to minimize or at least reduce losses associated with the operation.

### BRIEF SUMMARY

In an aspect of the invention there is provided a loss monitoring system for a header arrangement operably couplable to an agricultural harvesting machine, the loss monitoring system comprising: one or more transceiver sensors coupleable, in use, to the header arrangement and configured, in use, for transmitting measurement signals and receiving reflections thereof from an object within a sensing region of the sensor which at least partly includes a region below the header arrangement; and a control system comprising one or more controllers being collectively configured to: receive sensor data from the sensor(s); process the sensor data to: identify one or more crop constituents present within the sensing region; and determine a loss metric for an agricultural operation performed by the header arrangement in dependence on the identified crop constituent(s); and generate and output one or more control signals for controlling operation of one or more operable components of or otherwise associated with the header arrangement and/or the agricultural harvesting machine in dependence on the determined loss metric.

Advantageously, the loss monitoring system is configured to utilise transmitted measurement signals to identify specific material constituents falling below a header arrangement associated with an agricultural harvesting machine. In this way, the loss monitoring system may be configured to directly measure a loss metric during performance of a harvesting operation, e.g. without requiring the operator to stop the machine and inspect a ground area for crop constituents on the ground. Having a system which is configured for identifying individual constituents may additionally provide a more accurate measurement of header loss associated with the operation, e.g. by only counting / measuring crop constituents of interest, e.g. individual grain or kernel constituents, from material other than grain, e.g. leaves, straw etc.

The one or more controllers may collectively comprise an input (e.g. an electronic input) for receiving one or more input signals. The one or more input signals may comprise data indicative of the sensor data from the one or more transceiver sensors. The one or more controllers may collectively comprise one or more processors (e.g. electronic processors) operable to execute computer readable instructions for controlling operational of the control system, for example, to identify the crop constituent(s) and/or determine the loss metric. The one or more processors may be operable to generate one or more control signals for controlling operation of the one or more operable components. The one or more controllers may collectively comprise an output (e.g. an electronic output) for outputting the one or more control signals.

The identification of the crop constituent(s) may comprise analysing one or more signal properties of the reflected measurement signals.

The one or more signal properties may include a time delay between transmission and receipt of the reflected measurement signal. The time delay may be indicative of a distance between the sensor(s) and the associated object. The distance may be used as a filter in the identification of the crop constituents, e.g. by filtering out reflections from objects determined to be outside of a target region for monitoring header loss.

The one or more signal properties may include an amplitude of the reflected measurement signal. The amplitude of the reflected measurement signal may be proportional to the size of the associated object and the distance between the sensor(s) and the object. Accordingly, the one or more controllers may utilise multiple signal properties to identify the crop constituent(s).

The one or more signal properties may include a signal profile for the reflected measurement signal. This may include a signal signature, which may relate to an amplitude profile over time.

The one or more signal properties may comprise a frequency profile for the reflected measurement signal. The one or more controllers may be configured to determine a velocity or speed metric for a crop constituent from the frequency profile.

The identification of the crop constituent(s) may comprise determining an identify for a given crop constituent. For instance, the one or more controllers may be configured to classify any identified crop constituent into one of a plurality of classifications. This may be performed on the basis of the one or more signal properties, for example.

The loss metric may quantify a crop loss associated with the agricultural harvesting machine. This may comprise a count of individual crop constituents identified in the sensor data. The count may be used to determine a loss rate for the harvesting machine and/or header arrangement.

The one or more transceiver sensors are coupleable, in use, to the header arrangement and configured, in use, for transmitting measurement signals and receiving reflections thereof from an object within a sensing region of the sensor which at least partly includes a region below the header arrangement. The one or more transceivers may be mounted in a respective housing, the housing being provided with connection means for coupling the sensor(s) to the header arrangement, e.g. in position such that the sensing region is provided underneath the header arrangement, in use.

The one or more transceiver sensors may comprise a radar sensor.

The one or more transceiver sensors may be configured for generating a two dimensional sensing region defining a plane. The sensing region may be orientated substantially horizontally below the header arrangement, in use, such that crop constituents may fall through the sensing region, in use.

In other embodiments, the one or more transceiver sensors may be configured for generating a three dimensional sensing region. For instance, the three dimensional sensing region may comprise a cone-shaped sensing region. For a three dimensional sensing region, the region may be positioned such that, in use, the crop constituents move through the region, and may be optionally tracked as they move therethrough.

The one or more operable components may comprise one or more functional components of the header arrangement. This may include a skid plate, row unit, auger, conveyor or the like. The one or more controllers may be operable to control one or more functions of said functional components, which may comprise the operation of the component(s), an operational speed of said component(s), a relative position of features of the component(s) or the like. For example, the one or more controllers may be configured to control a spacing of skid plates or row units of the header arrangement, or an operational speed, e.g. rotational speed of the component(s). The one or more controllers may be operable to control a cutting speed or chain speed associated with one or more row units of the header arrangement.

The one or more operable components may comprise one or more functional components of the agricultural machine. This may include a steering and/or propulsion system of the agricultural machine for controlling motion of the machine in dependence on the determined loss metric. In some embodiments, the control system may be operable to control a propulsion and/or braking system of the agricultural machine for controlling a forward speed of the machine in dependence on the determined loss metric.

The one or more operable components may comprise a user interface of or otherwise associated with the agricultural machine. The user interface may, for example, comprise a display terminal or the like of the machine, such as a display screen in an operator cab of the machine. The user interface may instead be provided on a remote device, e.g. a tablet computer or the like operably connected to the agricultural machine. The control system may be operable to control operation of the user interface for displaying or otherwise providing information indicative of the determined loss metric to an operator of the machine.

In embodiments, the crop constituent(s) comprise corn kernels. The agricultural machine may comprise a harvesting machine, such as a corn harvester. The header arrangement may comprise a header connected or mountable to the agricultural harvesting machine, such as a corn header for a corn harvester.

According to a further aspect of the invention there is provided header arrangement for a harvesting machine comprising the loss monitoring system as described herein.

The header arrangement may be provided with the one or more sensors operably coupled to an underside thereof, e.g. via suitable connection means or within an integrated housing present in the header arrangement.

A further aspect of the invention provides an agricultural machine comprising or being operably coupleable to the header arrangement and/or the loss monitoring system of any preceding aspect.

The agricultural machine may comprise a harvesting machine, such as a combine harvester or forage harvester.

According to a further aspect of the invention there is provided a method of monitoring crop loss associated with a header arrangement operably couplable to an agricultural harvesting machine, the method comprising: receiving sensor data from one or more transceiver sensors coupleable, in use, to the header arrangement and configured, in use, for transmitting measurement signals and receiving reflections thereof from an object within a sensing region of the sensor which at least partly includes a region below the header arrangement; and processing the sensor data to: identify one or more crop constituents present within the sensing region; and determine a loss metric for an agricultural operation performed by the header arrangement in dependence on the identified crop constituent(s); and controlling operation of one or more operable components of or otherwise associated with the header arrangement and/or the agricultural harvesting machine in dependence on the determined loss metric.

The method of the present aspect of the invention may comprise performance of any one or more of the functional features of the one or more controllers of the loss monitoring system of a preceding aspect discussed herein.

A further aspect of the invention comprises computer software which, when executed by one or more processors, causes performance of the method of the preceding aspect of the invention.

An aspect of the invention provides a computer readable storage medium comprising the computer software of the preceding aspect of the invention.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified cross-sectional side view illustrating a combine harvester embodying aspects of the present disclosure;
FIG. 2 is a schematic perspective view of a corn header;
FIG. 3 is a schematic diagram illustrating an embodiment of a loss monitoring system of the present disclosure;
FIG. 4 is a photograph illustrating the position of components of a loss monitoring system of the present disclosure, in use; and
FIG. 5 is experimental data illustrating the functionality of aspects of the present disclosure.

### DETAILED DESCRIPTION

Systems and methods are provided for monitoring operation of an agricultural machine (e.g. a harvester 10) performing an agricultural operation (e.g. a harvesting operation) in a working environment such as a field, and specifically for monitoring crop loss associated with a header arrangement 16 (referred to interchangeably as a header 16) operably coupled to the harvester 10. Sensor data from one or more transceiver sensors (e.g. radar sensor 29) mounted on or otherwise coupled to the header 16 is obtained and used to monitor operation of the header 16 in the manner discussed herein.

Specifically, sensor data from the radar sensor 29 is used determine a crop loss metric associated with the header 16. The crop loss metric can include a count or rate of individual or specific crop constituents falling through the header 16 and landing on the ground, for example. Crop constituents may include, in an example, corn kernels or the like. One or more operable components associated with the harvester 10 and/or the header arrangement 16 can then be controlled in dependence on the determined loss metric. The operable component(s) may include functional components of the header 16, a user interface 32 associated with the harvester 10 and/or operation of the harvester 10 itself, e.g. through control over a propulsion, braking and/or steering system of the harvester 10 in the manner described hereinbelow.

### Harvester

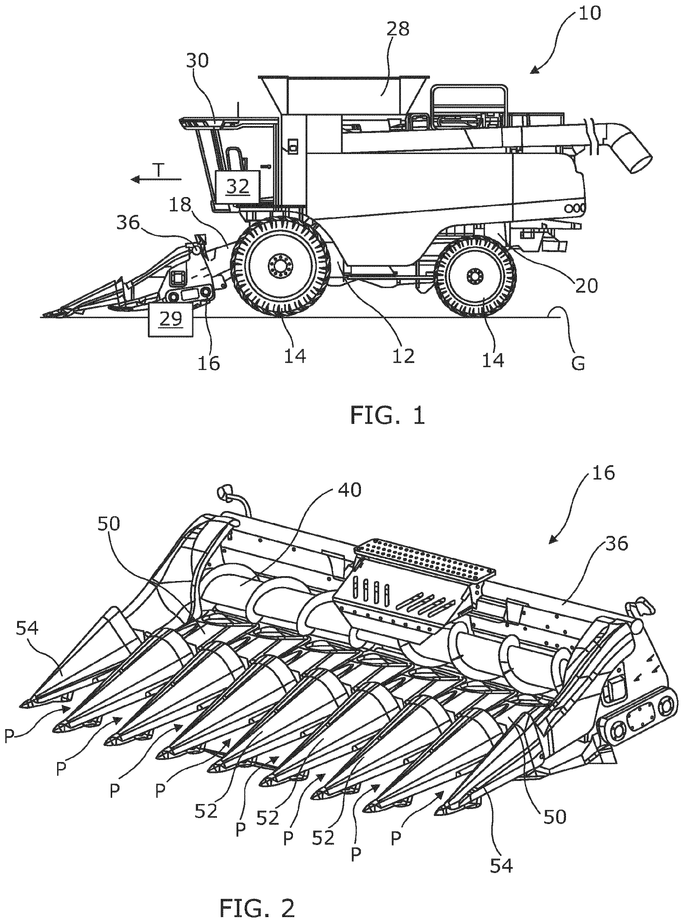

FIG. 1 illustrates an agricultural harvester 10, which includes a chassis 12 supported and propelled along the ground G by ground-engaging wheels 14. Although the harvester 10 is illustrated as being supported and propelled on ground-engaging wheels 14, the harvester 10 can also be supported and propelled by full tracks or half tracks. A harvesting header 16 carried by the chassis 12 is used to gather crop and to conduct the crop material to a feederhouse 18 and then to a beater in the harvester 10. The beater guides the crop upward to a threshing and separating system 20, which is configured to separate grain from material other than grain (MOG), and deliver the grain to a grain tank 28 carried by the harvester 10. The operation of the harvester 10 is controlled from an operator cab 30. A user interface 32 is provided within the operator cab 30 for displaying or otherwise providing information to an operator of the harvester 10 data indicative of the operation of the harvester 10 or other associated components, e.g. the header 16. The header 16 is additionally provided with a transceiver sensor in the form of radar sensor 29 mounted thereto and configured to obtain sensor data representative of a sensing region underneath header 16 for monitoring its operation in the manner discussed herein.

FIG. 2 is a simplified perspective view of the harvesting header 16, which is a corn header. The illustrated corn header includes a header frame 36 carrying an auger 40 and eight row units 50. The row units 50 are separated by seven row dividers 52 and surrounded by end dividers 54. Ears of corn are stripped from each of eight crop rows planted along row paths P by the row units 50 and then carried by the auger 40 toward the feederhouse 18 of the harvester 10. Harvesting corn in a harvester 10 is described generally in U.S. Patent 9,322,629, "Stalk Sensor Apparatus, Systems, and Methods," issued April 26, 2016.

### Loss Monitoring System

As discussed herein, a control system 100 is provided and configured to controlling operation of one or more operable components (e.g. header control unit 120, harvester control unit 130, and/or user interface 32) associated with the harvester 10. In the illustrated embodiment the controllable components include a header control unit 120 for controlling functional features of the header 16, a harvester control unit 130 for controlling operational parameters of the harvester 10, e.g. a forward speed or path, and the user interface 32, here provided as a display terminal provided within the operator cab 30 of the harvester 10, and is utilised to provide an indication of the operation of the control system 100 and/or to receive one or more operator inputs for controlling operation of the control system 100 or associated components in the manner described herein.

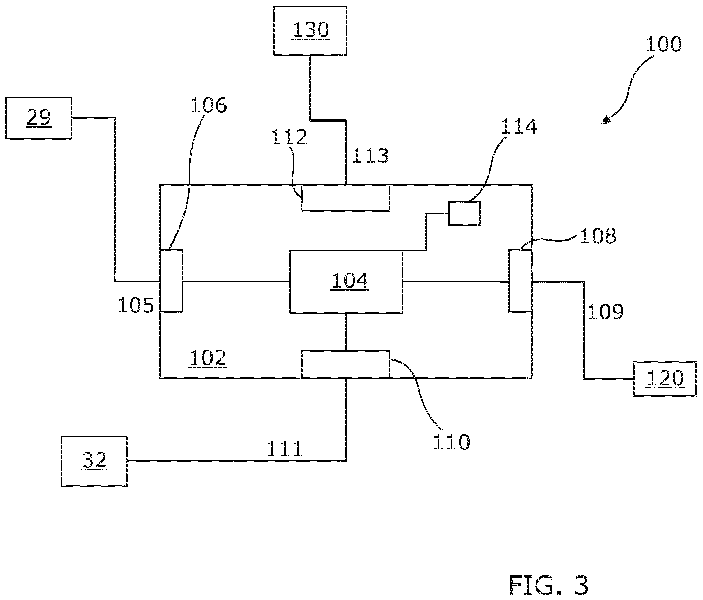

FIG 3 illustrates the control system 100 further. As shown, control system 100 comprises a controller 102 having an electronic processor 104, electronic input 106 electronic outputs 108, 112 and electronic input/output 110. The processor 104 is operable to access a memory 114 of the controller 102 and execute instructions stored therein to perform the steps and functionality of the present invention discussed herein, e.g. by controlling operation of functional components of the header 16 in dependence on a loss metric as determined by the control system 100, and/or controlling the user interface 32 to display information indicative of determined loss metric and/or to receive an operator input for initiating control actions based on the determined loss metric, through generation and output of one or more control signals.

The processor 104 is operable to receive via input 106 which, in the illustrated embodiment, takes the form of input signals 105 received from a control unit associated with radar sensor 29. The processor 104 is configured to analyse the sensor data and determine therefrom a crop loss metric in the manner discussed herein, e.g. through identification of individual crop constituents within the data and an associated quantification of those identified constituents. Specifically, sensor data from the radar sensor 29 is analysed to identify individual crop constituents falling through the sensing region associated with the radar sensor 29. Here, this comprises an analysis of one or more signal properties of reflected measurement signals received at the radar sensor 29. The signal property(ies) include a time delay between transmission of the measurement signal by a transmitter of the radar sensor 29 and subsequent receipt of the measurement signal at a receiving element of the radar sensor 29 following reflection of the transmitted signal off one or more objects within the sensing region of the sensor 29 - i.e. of individual crop constituents therein. The time delay may be indicative of a distance between the radar sensor 29 and the point of reflection, thereby providing an indication of the position of the associated object with respect to the radar sensor 29. A second signal property may include an amplitude of the reflected measurement signal. The amplitude may be dependent on both the distance between the sensor 29 and the object in the sensing region along with properties of the object itself, e.g. constitution and/or size of the object.

Accordingly, the control system 100 may utilise the signal properties to identify the crop constituents detected in the sensing region of the radar sensor 29. By positioning the sensor 29 in the manner discussed herein, e.g. with the sensing region substantially horizontally underneath the header 16, individual crop constituents falling through the header 16 and onto the ground can be identified, representative of a header loss associated with the operation being performed.

In embodiments the loss metric quantifies a crop loss associated with the harvester 10. Here, this includes a count of individual crop constituents of interest identified in the sensor data. This can include a count of individual crop grains / kernels falling through the header 16 and onto the ground, thereby being directly related to a crop loss associated with the harvesting operation.

As described above, the controller 102 includes an electronic output 108 configured to output control signals 109 generated by the processor 104 for controlling operation of one or more operable components associated with the header 16. Specifically, in the illustrated embodiment, the processor 104 is operable to generate, and the controller 102 operable then to output via output 108, control signals 109 to local control unit 120 of the header 16 for controlling operable parameters thereof in dependence on the determined loss metric. In practice, this may include adjusting an operation of operable components of the header 16, an operational speed of said component(s) and a relative position of the component(s). This can include a cutting speed or chain speed of one or more of the row units 50, and/or a separation distance between adjacent row units 50. This may be at least partly automated in dependence on the determined loss metric, or may require a user input to enact those changes, e.g. through interaction with the user interface 32.

Controller 102 additionally includes an electronic output 112 for outputting control signals 113 to a control unit 130 associated with the harvester 10. In turn, said control unit 130 may be operable to control operation of one or more of a steering system, braking system and/or propulsion system of the harvester 10 for controlling motion of the harvester 10 in dependence on the loss metric determined in the manner described herein. In practice, this may include control over a forward speed and/or operational path for the harvester 10. For instance, where a relatively high loss is identified, the forward speed of the harvester 10 may be reduced.

Input/output 110 is operably connected to user interface 32. The control system 100 is operable to control operation of the user interface 32, e.g. through output of control signals 111 in order to display data to an operator of the harvester 10 indicative of the loss metric, as determined by processor 104. This can include simply providing an indication to the operator of the determined loss metric, e.g. the determined ground loss, or prompt the operator to initiate one or more actions for reducing or minimizing the ground loss. In response to an operator input, further actions may be taken by the control system 100 according to the input, e.g. for controlling operation of the harvester 10 and/or header 16 specifically via local control units 120, 130. For this purpose, the input/output 110 is additionally configured to receive input signals 111 from the user interface 32 indicative of an operator input at the user interface 32.

### Setup

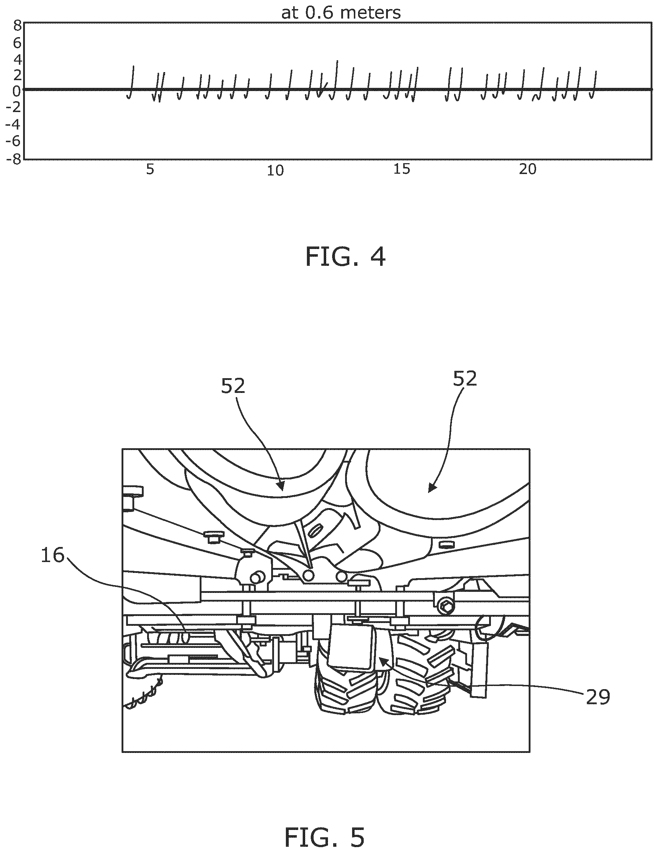

FIG 4 illustrates experimental data indicative of a sensor output, e.g. for radar sensor 29, where individual crop components were dropped through a sensing region of the sensor 29. Here, individual spikes are seen, along with a characteristic waveform, in the sensor data from radar sensor 29. These spikes directly correspond to individual corn kernels dropped through the sensing region of the sensor 29. Whilst this illustrates the sensor output in a controlled environment, it is indicative of the operational use of the sensor 29 on a harvesting machine, such as harvester 29. Specifically, with suitable calibration and filtering of any noise components on the machine, such spikes may be readily present in the sensor data obtained by radar sensor 29 and a count of such spikes, or indeed a rate of individual detections may be used to determine a relative loss metric for a given operation.

FIG. 5 illustrates an embodiment of a setup with radar sensor 29 mounted underneath a header arrangement 16. Specifically, the radar sensor is positioned such that it generates a 2-dimensional sensing region below the header 16 which is substantially horizontal with respect to the ground surface., and specifically in a region between row units 52. In this way, the sensing region is setup in a manner such that individual crop constituents can be detected and identified falling therethrough during performance of a harvesting operation.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A loss monitoring system for a header arrangement operably couplable to an agricultural harvesting machine, the loss monitoring system comprising:
one or more transceiver sensors coupleable, in use, to the header arrangement and configured, in use, for transmitting measurement signals and receiving reflections thereof from an object within a sensing region of the sensor which at least partly includes a region below the header arrangement; and
a control system comprising one or more controllers being collectively configured to:
receive sensor data from the sensor(s);
process the sensor data to:
identify one or more crop constituents present within the sensing region; and
determine a loss metric for an agricultural operation performed by the header arrangement in dependence on the identified crop constituent(s); and
generate and output one or more control signals for controlling operation of one or more operable components of or otherwise associated with the header arrangement and/or the agricultural harvesting machine in dependence on the determined loss metric.

2. A loss monitoring system of claim 1, wherein the identification of the crop constituent(s) comprises analysing one or more signal properties of the reflected measurement signals.

3. A loss monitoring system of claim 2, wherein the one or more signal properties include a time delay between transmission and receipt of the reflected measurement signal; wherein the time delay is indicative of a distance between the sensor(s) and the associated object.

4. A loss monitoring system of claim 2 or claim 3, wherein the one or more signal properties include an amplitude of the reflected measurement signal, wherein the amplitude of the reflected measurement signal is proportional to the size of the associated object and the distance between the sensor(s) and the object.

5. A loss monitoring system of any of claims 2 to 4, wherein the one or more controllers are configured to utilise multiple signal properties to identify the crop constituent(s).

6. A loss monitoring system of any preceding claim, wherein the loss metric quantifies a crop loss associated with the agricultural harvesting machine.

7. A loss monitoring system of claim 6, wherein the loss metric comprises a count of individual crop constituents identified in the sensor data.

8. A loss monitoring system of any preceding claim, wherein the one or more transceiver sensors are mounted in a respective housing, the housing being provided with connection means for coupling the sensor(s) to the header arrangement.

9. A loss monitoring system of any preceding claim, wherein the one or more transceiver sensors comprise a radar sensor.

10. A loss monitoring system of any preceding claim, wherein the one or more transceiver sensors are configured to generate a two dimensional sensing region defining a plane; wherein the sensing region is orientated substantially horizontally below the header arrangement, in use, such that crop constituents fall through the sensing region, in use.

11. A loss monitoring system of any preceding claim, wherein the one or more operable components comprise one or more functional components of the header arrangement; and wherein the one or more controllers are operable to control one or more functions of said functional components, which comprises one or more of: the operation of the component(s), an operational speed of said component(s), and a relative position of features of the component(s).

12. A loss monitoring system of any preceding claim, wherein the one or more operable components comprise one or more functional components of the agricultural machine, including one or more of a steering and/or propulsion system of the agricultural machine for controlling motion of the machine in dependence on the determined loss metric.

13. A loss monitoring system of any preceding claim, wherein the crop constituent(s) comprise corn kernels, the agricultural harvesting machine comprises a corn harvester and the header arrangement comprises a corn header connected or mountable to the agricultural harvesting machine.

14. A header arrangement for a harvesting machine comprising the loss monitoring system of any preceding claim.

15. A method of monitoring crop loss associated with a header arrangement operably couplable to an agricultural harvesting machine, the method comprising:
receiving sensor data from one or more transceiver sensors coupleable, in use, to the header arrangement and configured, in use, for transmitting measurement signals and receiving reflections thereof from an object within a sensing region of the sensor which at least partly includes a region below the header arrangement;
processing the sensor data to:
identify one or more crop constituents present within the sensing region; and
determine a loss metric for an agricultural operation performed by the header arrangement in dependence on the identified crop constituent(s); and
controlling operation of one or more operable components of or otherwise associated with the header arrangement and/or the agricultural harvesting machine in dependence on the determined loss metric.
